# EUROPÄISCHE PATENTANMELDUNG

(11) **EP 2 051 070 A1**
(43) Veröffentlichungstag der Anmeldung: **22.04.2009**
(21) Anmeldenummer: 07020440.9
(22) Anmeldetag: 18.10.2007
(51) Int. Cl.: G01N 29/22, G01N 29/26, G01N 29/06

(54) **Verfahren und Vorrichtung zur zerstörungsfreien Materialprüfung eines Prüfgegenstandes mit Ultraschallwellen**

(71) Anmelder: SIEMENS AKTIENGESELLSCHAFT, 80333 München (DE)
(72) Erfinder: Clossen-von Lanken Schulz, Michael, 47608 Geldern (DE); Opheys, Michael, Dr., 41334 Nettetal (DE)

(57) **Zusammenfassung**

Die Erfindung betrifft ein Verfahren zur zerstörungsfreien Materialprüfung eines zumindest abschnittsweise massiven Prüfgegenstands (10) durch Beaufschlagen des Prüfgegenstands (10) mit Ultraschallwellen (20) und Erfassen der innerhalb des Prüfgegenstands (10) reflektierten Ultraschallwellen. Das Verfahren weist die folgenden Schritte aufweist:
- rechnergestütztes Unterteilen des Prüfgegenstands (10) in eine vorbestimmte Anzahl von Volumenelementen (30),
- Beaufschlagen des Prüfgegenstands (10) mit einem Schallfeld (14) während eines Abtastens der Oberfläche oder zumindest eines Oberflächenabschnitts des Prüfgegenstands (10),
- Erfassen der an den Volumenelementen reflektierten Schallwellen während des Abtastens der Oberfläche oder zumindest des Oberflächenabschnitts des Prüfgegenstands (10), und
- phasenrichtiges Aufaddieren der an denselben Volumenelementen (30) reflektierten und an verschiedenen Messpositionen (22, 24, 26) auf der Oberfläche des Prüfgegenstands (10) erfassten Schallwellen.

Gemäß der Erfindung wird in jeder Messposition (22, 24, 26) ein Zentralstrahl (16) auf das Volumenelement (30) gerichtet, wobei der Zentralstrahl (16) die maximale Intensität des Schallfeldes (14) aufweist. Weiterhin betrifft die Erfindung eine entsprechende Vorrichtung.

## Beschreibung

Die Erfindung betrifft ein Verfahren-zur zerstörungsfreien Materialprüfung gemäß dem Oberbegriff des Patentanspruches 1. Weiterhin betrifft die Erfindung eine entsprechende Vorrichtung gemäß dem Oberbegriff des Patentanspruches 11. Außerdem betrifft die Erfindung eine Vorrichtung zur Untersuchung eines Objekts innerhalb eines menschlichen oder tierischen Körpers gemäß dem Oberbegriff des Patentanspruches 15.

Bei zahlreichen massiven und teilweise massiven Bauteilen und Zwischenprodukten ist es erforderlich, dass deren innere Struktur nach Materialfehlern untersucht wird. Dazu sind zerstörungsfreie Prüfverfahren erforderlich, die Informationen über die innere, nicht-einsehbare Struktur bereitstellen. Dies ist insbesondere bei mechanisch stark beanspruchten Bauteilen notwendig.

Beispielsweise werden Bauteile aus Stahl nach dem Gießen geschmiedet, um anschließend durch Drehen in die endgültige Form gebracht zu werden. Dabei kann die Prüfung auf innere Materialfehler bereits nach dem Schmieden erfolgen.

Üblicherweise werden solche Metallteile mit Ultraschall geprüft. Dabei werden die Schallwellen erfasst, die an Grenzflächen innerhalb des Materials reflektiert werden. Mit der Laufzeit der reflektierten Schallwelle kann deren zurückgelegte Weglänge bestimmt werden. Durch eine Einschaltung aus verschiedenen Richtungen lassen sich weitere Informationen über den oder die Materialfehler gewinnen. Daraus lassen sich beispielsweise Materialfehler orten. Beispielsweise kann die geometrische Ausrichtung des Materialfehlers auf diese Weise bestimmt werden. Aus der Form der reflektierten Schallwellen lassen sich Rückschlüsse auf die Art des Materialfehlers ziehen.

Durch ein Abtasten der Oberfläche des Prüfgegenstands mit einem Ultraschalldetektor und ein Aufzeichnen der erfassten Daten kann das dem Ultraschall zugängliche Volumen vollständig untersucht werden. Aus den erfassten Daten lässt sich eine Abbildung generieren, die zur Begutachtung verwendet werden kann.

Zur Bestimmung der Größe der Materialfehler gibt es mehrere Möglichkeiten. Beispielsweise kann beim Abtasten die Ausdehnung des Materialfehlers direkt abgelesen werden. Dazu ist jedoch erforderlich, dass die Ortsauflösung kleiner als die räumliche Ausdehnung des Materialfehlers ist. Die Ortsauflösung ist durch die verwendete Wellenlänge und die Größe der Apertur und damit durch die Beugung der Schallwellen begrenzt.

Die Größe des Materialfehlers kann auch mit der Amplitude des reflektierten Signals bestimmt werden. Damit lässt sich auch die Größe solcher Materialfehler bestimmen, die kleiner als die Ortsauflösung des Verfahrens sind. Die Amplitude des reflektierten Signals hängt jedoch auch von weiteren Parametern ab, beispielsweise von der Orientierung des Materialfehlers oder den Reflexionseigenschaften an der Grenzfläche.

Bei abnehmender Größe des Materialfehlers nimmt die Amplitude des reflektierten Signals ab. Dabei wird der Abstand zu den Störsignalen zu gering, um aus einem einzigen Amplituden-Laufzeit-Diagramm den Materialfehler zu identifizieren. Zweckmäßigerweise ist ein Abstand von +6 dB zwischen dem Messsignal und dem Störsignal erforderlich.

Die Ortsauflösung lässt sich durch eine Fokussierung der Schallwellen mit Hilfe geeigneter Prüfköpfe optimieren. Dabei kann die Fokussierung umso schmäler werden, je breiter der Prüfkopf im Verhältnis zur Wellenlänge ist. Die Fokussierung bewirkt einen höheren Schalldruck.

Daraus lässt sich die Position des Materialfehlers und bei einem ausgedehnten Materialfehler auch dessen Größe im Rahmen der Auflösung bestimmen. Die Genauigkeit ist etwa vergleichbar mit der in dem abgetasteten Bereich bei dem vorgenannten Verfahren, das die fokussierten Schallwellen verwendet.

Die Synthetic-Aperture-Focusing-Technique (SAFT) ist ein Verfahren, das einer mechanischen zweidimensionalen Abtastung des Prüfgegenstands eine dreidimensionale Darstellung zuordnet. Dabei wird der Prüfgegenstand zweidimensional abgetastet. Dies erfolgt beispielsweise entlang einer mäanderförmigen Bahn. Die Daten werden zusammen mit Positionsdaten des Prüfgegenstands für die weitere Auswertung gespeichert. Der Prüfgegenstand wird in kleine Volumenelemente, beispielsweise in Würfel unterteilt. Die Volumenelemente werden mit Summen von Echosignalteilen belegt, die von verschiedenen Positionen des Prüfkopfs bei der zweidimensionalen Abtastung stammen.

Beim SAFT-Verfahren werden in jedem Bildpunkt in einem Fehlererwartungsbereich alle in Frage kommenden reflektierten Signalanteile mit einer Zeitverschiebung addiert, die die Signalanteile dann hätten, wenn der Bildpunkt die Quelle einer reflektierten Welle wäre. Die Zeitverschiebung, die der Phasenlage entspricht, ergibt sich aus den geometrischen Beziehungen zwischen dem Prüfkopf und dem Bildpunkt, insbesondere aus dem Abstand zwischen dem Prüfkopf und dem Bildpunkt. Wenn der Bildpunkt nun tatsächlich die Quelle einer reflektierten Welle ist, dann nimmt die Amplitude an dieser Stelle mit der Anzahl der verschiedenen Positionen des Prüfkopfs zu, von denen aus der Materialfehler erfasst wurde. Für alle anderen Bildpunkte stimmen die Phasen nicht überein, so dass die Summe im Idealfall gegen Null geht, zumindest aber sehr klein ist.

Die Ortsauflösung ist bei dem SAFT-Verfahren nicht durch die Abmessungen des Prüfkopfs begrenzt, so dass eine hohe Ortsauflösung möglich ist. Es handelt sich im Prinzip um ein Fökussierungsverfahren, bei dem sich die Auflösungsgrenze durch die Wellenlänge und die synthetische Apertur ergibt. Die synthetische Apertur wird von dem Winkelbereich bestimmt, aus dem der Materialfehler erfasst wird. Die Apertur wird durch die Bewegung des Prüfkopfes und die Divergenz des Schallfeldes begrenzt.

Beim SAFT-Verfahren werden nicht nur die zentralen Strahlen, sondern alle Strahlen eines Divergenzbündels berücksichtigt. Da die Daten mit hohen Frequenzen aufgezeichnet werden, kann bei der Addition der Daten auch die Phase berücksichtigt werden. In Abhängigkeit von der Phase können sich Echosignale bei destruktiver Interferenz auslöschen und bei konstruktiver Interferenz verstärken.

Gemäß dem Stand der Technik werden alle Echosignale unabhängig von ihrer Lage innerhalb des Divergenzbündels gleichermaßen berücksichtigt. Dies hat zur Folge, dass die Echosignale der Randstrahlen einen Reflektor um den Faktor "2" bei gleichem Reflexionsvermögen unterbewerten. Der Faktor "2" entspricht einem Abstand von 6 dB. Die Echosignale der Randstrahlen führen zu einer Verfälschung der für die einzelnen Volumenanteile berechneten Echosummen. Die Anteile der Echosignale, die nicht aus dem Zentralstrahl stammen, sind wesentliche Bestandteile des SAFT-Verfahrens.

Eine Korrektur dieser Anteile wäre nur bei einer genauen Kenntnis des Schallfeldes möglich. In der Praxis ist dies nicht vollständig möglich, so dass die Resultate stets einem Fehler unterliegen. Eine anschließende Bewertung der erhaltenen Daten nach dem Abstand-Verstärkung-Größe-Verfahren (AVG-Verfahren) ist nicht möglich, da das AVG-Verfahren die genaue Kenntnis der Echoamplitude voraussetzt.

Bei AVG-Verfahren wird ausgehend von der Amplitude dem Materialfehler eine Ersatzreflektorgröße zugeordnet, die eine senkrecht beschallte freie kreisrunde Oberfläche erzeugen würde. Wenn das erfasste Signal deutlich größer ist als das Störsignal oder Rauschsignal, ist die Auswertung der Amplitude nach der AVG-Methode problemlos möglich. Dabei muss sich der Reflektor auf dem Zentralstrahl des Schallfeldes des Prüfkopfes befinden. Aus der Abhängigkeit der Amplitude vom Abstand zum Prüfkopf entspricht die erfasste Amplitude einer Reflektorgröße mit bekannter Geometrie und Orientierung zum Zentralstrahl. Ist dagegen die erfasste Amplitude kleiner als das Rauschsignal oder in einer vergleichbaren Größenordnung, kann der Materialfehler aus dem Amplituden-Laufzeit-Diagramm nicht identifiziert werden.

Es ist Aufgabe der Erfindung, ein verbessertes Verfahren und eine entsprechende Vorrichtung zur zerstörungsfreien Materialprüfung eines Prüfgegenstands mit Ultraschallwellen bereit zu stellen.

Diese Aufgabe wird hinsichtlich des Verfahrens durch den Gegenstand gemäß Patentanspruch 1 gelöst.

Gemäß der Erfindung ist vorgesehen, dass in jeder Messposition ein Zentralstrahl auf das Volumenelement gerichtet wird, wobei der Zentralstrahl die maximale Intensität des Schallfeldes aufweist.

Der Kern der Erfindung liegt in einem modifizierten SAFT-Verfahren, bei dem der Zentralstrahl mit der maximalen Intensität des Schallfeldes auf das Volumenelement gerichtet wird. Auf diese Weise spielen die Anteile der Echosignale, die von Randstrahlen ausgehen, keine Rolle und tragen nicht zu Verfälschungen des Messergebnisses bei.

Vorzugsweise ist vorgesehen, dass der Zentralstrahl elektronisch auf das Volumenelement gerichtet wird. Dies ermöglicht eine schnelle und präzise Durchführung des Verfahren.

Vorteilhafterweise ist die Richtung des Zentralstrahls zweidimensional veränderbar. Damit ist sichergestellt, dass bei allen geometrischen Formen des Prüfgegenstands der Zentralstrahl auf das Volumenelement gerichtet werden kann.

Beispielsweise wird zum Beaufschlagen des Prüfgegenstands mit Ultraschall ein Prüfkopf verwendet, der eine Vielzahl Ultraschallquellen umfasst. Die einzelnen Ultraschallquellen sind elektronisch besonders einfach ansteuerbar. Insbesondere ist der Prüfkopf ein Gruppenstrahler..

Anschließend werden die aufaddierten Schallwellen nach dem Abstand-Verstärkung-Größe-Verfahren (AVG-Verfahren) ausgewertet.

Weiterhin ist vorgesehen, dass die Oberfläche oder zumindest der Oberflächenabschnitt des Prüfgegenstands nach einem vorbestimmten Schema abgetastet wird.

Insbesondere wird die Oberfläche oder zumindest der Oberflächenabschnitt des Prüfgegenstands vollständig abgetastet.

Beispielsweise ist das Verfahren für die Materialprüfung eines Prüfgegenstands aus Metall vorgesehen. Insbesondere, aber nicht ausschließlich, kann das Verfahren für die Materialprüfung eines geschmiedeten Bauteils verwendet werden.

Außerdem kann das Verfahren neben der zerstörungsfreien Materialprüfung in entsprechender Weise auch für medizinische und medizintechnische Anwendungen vorgesehen sein. Dabei können beispielsweise von Außen Untersuchungen der inneren Struktur des menschlichen oder tierischen Körpers durchgeführt werden. Insbesondere können Tumore oder andere konstitutionelle Veränderungen innerhalb der Körpers aufgefunden und geortet werden. Weiterhin ermöglicht das Verfahren auch die Untersuchung von Fremdkörpern, die zu Behandlungszwecken in den menschlichen oder tierischen Körper eingesetzt worden sind. Beispielsweise können solche Befestigungselemente, die zum Verbinden von Knochenfrakturen eingesetzt worden sind, auf diese Weise untersucht werden.

Die der Erfindung zugrunde liegende Aufgabe wird hinsichtlich der Vorrichtung durch den Gegenstand gemäß Patentanspruch 11 gelöst.

Erfindungsgemäß ist vorgesehen, dass ein vom Prüfkopf ausgehender Zentralstrahl auf das Volumenelement ausrichtbar ist, wobei der Zentralstrahl die maximale Intensität des Schallfeldes aufweist.

Da der Zentralstrahl mit der maximalen Intensität des Schallfeldes auf das Volumenelement gerichtet wird, spielen die Anteile der Echosignale, die von Randstrahlen ausgehen, keine Rolle und tragen nicht zu Verfälschungen des Messergebnisses bei.

Vorzugsweise ist der Zentralstrahl elektronisch auf das Volumenelement ausrichtbar. Dies ermöglicht eine schnelle und präzise Durchführung des Verfahrens.

Beispielsweise weist der Prüfkopf eine Vielzahl Ultraschallquellen auf. Die einzelnen Ultraschallquellen sind elektronisch besonders einfach ansteuerbar. Insbesondere ist der Prüfkopf ein Gruppenstrahler.

Die der Erfindung zugrunde liegende Aufgabe wird sinngemäß für eine Vorrichtung zur Untersuchung eines Objekts innerhalb eines menschlichen oder tierischen Körpers durch den Gegenstand gemäß Patentanspruch 15 gelöst.

Erfindungsgemäß ist ebenfalls vorgesehen, dass ein vom Prüfkopf ausgehender Zentralstrahl auf das Volumenelement ausrichtbar ist, wobei der Zentralstrahl die maximale Intensität des Schallfeldes aufweist.

Da der Zentralstrahl mit der maximalen Intensität des Schallfeldes auf das Volumenelement gerichtet wird, spielen' auch bei dieser Anwehdung die Anteile der Echosignale, die von Randstrahlen ausgehen, keine Rolle und tragen nicht zu Verfälschungen des Messergebnisses bei.

Vorzugsweise ist der Zentralstrahl elektronisch auf das Volumenelement ausrichtbar. Damit lässt sich eine schnelle und präzise Untersuchung durchführen.

Vorzugsweise umfasst der Prüfkopf eine Vielzahl Ultraschallquellen. Die einzelnen Ultraschallquellen sind elektronisch besonders einfach ansteuerbar. Insbesondere ist der Prüfkopf ein Gruppenstrahler.

Weitere Merkmale, Vorteile und besondere Ausführungsformen der Erfindung sind Gegenstand der Unteransprüche.

Nachstehend wird das Verfahren gemäß der Erfindung in der Figurenbeschreibung anhand bevorzugter Ausführungsformen und unter Bezugnahme auf die beigefügten Zeichnungen näher erläutert. Es zeigen:
- FIG. 1: eine schematische seitliche Schnittansicht eines Prüfgegenstands und eines Prüfkopfes gemäß einer bevorzugten Ausführungsform des erfindungsgemäßen Verfahrens,
- FIG. 2: eine schematische seitliche Schnittansicht des Prüfgegenstands und drei Positionen des Prüfkopfs in einem unausgerichteten Zustand gemäß der bevorzugten Ausführungsform des erfindungsgemäßen Verfahrens, und
- FIG. 3: eine schematische seitliche Schnittansicht des Prüfgegenstands und der drei Positionen des Prüfkopfs in einem ausgerichteten Zustand gemäß der bevorzugten Ausführungsform des erfindungsgemäßen Verfahrens.

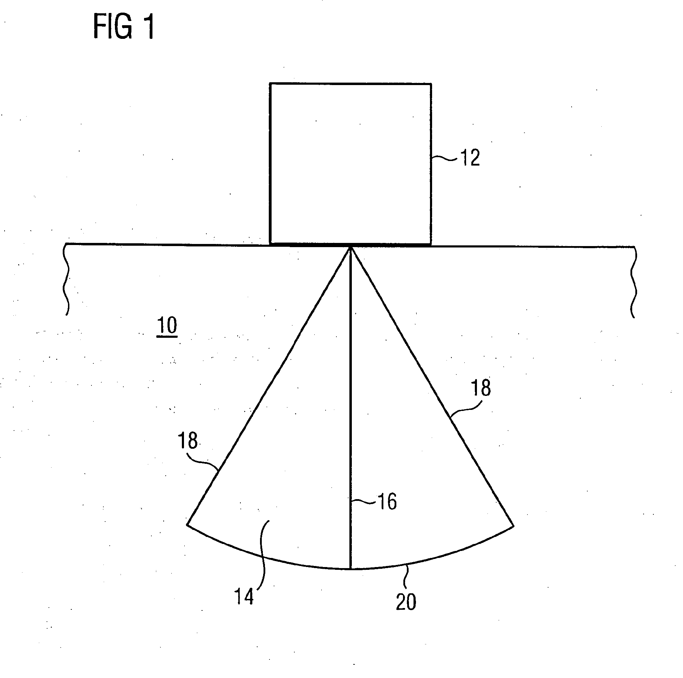

FIG. 1 zeigt eine schematische seitliche Schnittansicht eines Prüfgegenstands 10 und eines Prüfkopfes 12. Vom Prüfkopf 12 geht ein kegelförmiges Schallfeld 14 aus und dringt in den Prüfgegenstand 10 ein. Das Schallfeld 14 umfasst einen Zentralstrahl 16 und einen Vielzahl Randstrahlen 18. Die Randstrahlen 18 sind durch eine Abschwächung um -6 dB definiert. Außerdem umfasst das Schallfeld 14 zwischen dem Zentralstrahl 16 und den Randstrahlen 18 weitere Strahlen.

Das Schallfeld 14 umfasst weiterhin eine Wellenfront 20, die die Form eines Kugeloberflächenabschnitts aufweist. Das Schallfeld 14 bildet ein Divergenzbündel.

Die Materialprüfung erfolgt, indem der Prüfkopf 16 an der äußeren Oberfläche des Prüfgegenstands 10 bewegt wird. FIG. 1 verdeutlicht, dass eine radiale Schallwelle 22 an dem tangentialen Materialfehler 18 besonders stark reflektiert wird, da der tangentiale Materialfehler 18 im Wesentlichen parallel zur Oberfläche des Prüfgegenstands 10 ausgerichtet ist. Ebenso wird deutlich, dass eine tangentiale Schallwelle 24 an dem radialen Materialfehler 18 besonders intensiv reflektiert wird.

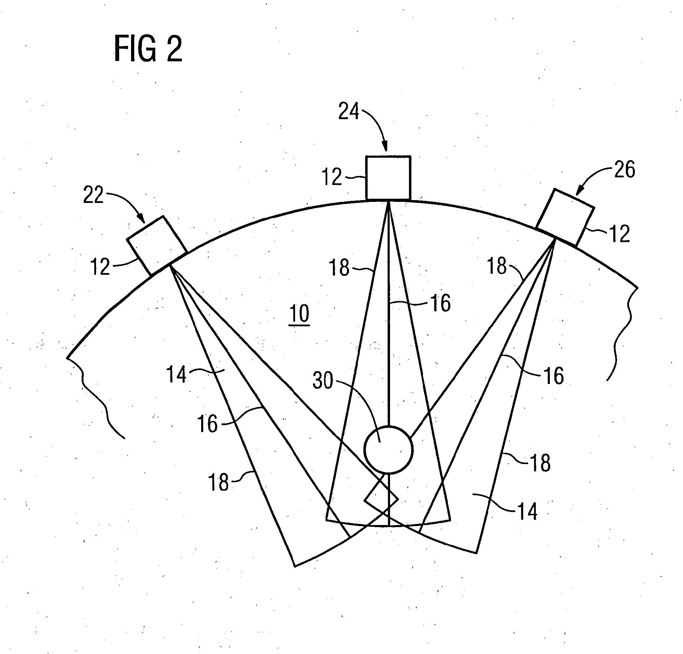

In FIG. 2 ist eine schematische seitliche Schnittansicht des Prüfgegenstands 10 und mehrerer Positionen des Prüfkopfs 12 in einem unausgerichteten Zustand gemäß der bevorzugten Ausführungsform des erfindungsgemäßen Verfahrens dargestellt.

Der Prüfkopf 12 ist an einer ersten Prüfkopfposition 22, einer zweiten Prüfkopfposition 24 und an einer dritten Prüfkopfposition 26 am Prüfgegenstand 10 dargestellt. Bei allen drei Prüfkopfpositionen 22, 24 und 26 befindet sich der Prüfkopf 12 auf der Oberfläche des Prüfgegenstands 10. In diesem Beispiel weist der Prüfgegenstand 10 eine gekrümmte Oberfläche auf. An jeder Prüfkopfpositioh 22, 24 und 26 erzeugt der Prüfkopf 12 ein Schallfeld 14 mit jeweils einem Zentralstrahl 16 und einer Vielzahl Randstrahlen 18. Zwischen dem Zentralstrahl 16 und den Raridstrahlen 18 befinden sich weitere Strahlen.

innerhalb des Prüfgegenstands 10 befindet sich ein Volumenelement 30. Das Schallfeld 14, das von der ersten Prüfkopfposition 22 ausgeht, läuft an dem Volumenelement 30 vorbei. Das von der zweien Prüfkopfposition 24 ausgehende Schallfeld 14 trifft mit seinem Zentralstrahl 16 das Volumenelement 30 in seinem Zentrum. Das Schallfeld 14, das von der dritten Prüfkopfposition 26 ausgeht, trifft mit einem seiner Randstrahlen 18 auf das Volumenelement 30. Nur diejenigen Strahlen, die auf das Volumenelement 30 auftreffen, leisten einen Beitrag.

Die Anteile der Echosignale für die verschiedenen Prüfkopfpositipnen 22, 24 und 26 werden entsprechend der Position mit Berücksichtigung der Phase aufaddiert. Dabei ist der Anteil des Echosignals, der von dem Zentralstrahl 16 der zweiten Prüfkopfposition 24 kommt, ein korrekter Beitrag für die Summe. Dagegen ist der Anteil des Echosignals, der von dem Randstrahl 18 der dritten Prüfkopfposition 26 kommt, verfälscht, nämlich zu gering. Der von der zweiten Prüfkopfposition 24 ausgehende Zentralstrahl 16 würde korrekt in die Berechnung eingehen. Dagegen würde der von der dritten Prüfkopfposition 26 ausgehende Randstrahl 18 mit Fehlern behaftet in die Berechnung eingehen. Auch die weiteren Strahlen, die von der zweiten Prüfkopfposition 24 kommen, würden verfälscht in die Berechnung eingehen.

Der unausgerichtete Zustand der Zentralstrahlen 16 entspricht auch der Ausrichtung bei einem konventionellen Verfahren.

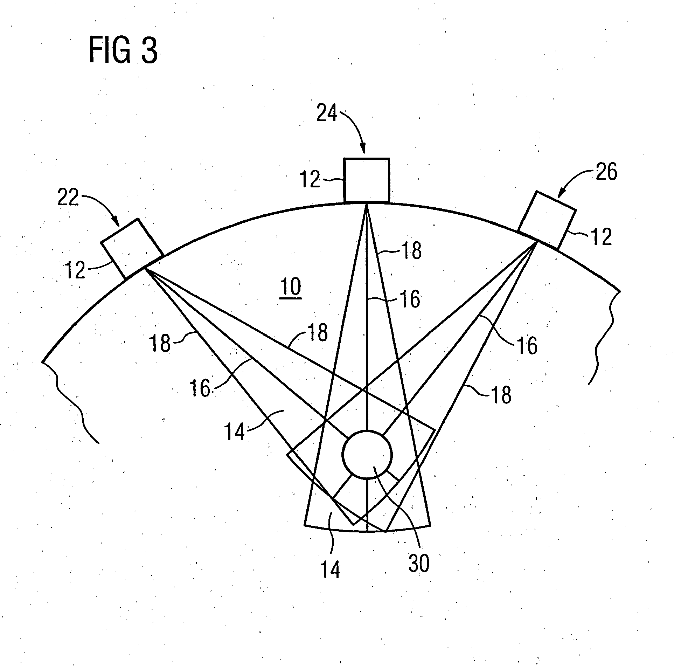

FIG. 3 zeigt eine schematische seitliche Schnittansicht des Prüfgegenstands 10 und der drei Positionen des Prüfkopfs 12 aus FIG. 2 in einem ausgerichteten Zustand gemäß der bevorzugten Ausführungsform des erfindungsgemäßen Verfahrens.

Im Gegensatz zu FIG. 2 sind in der FIG. 3 alle drei Zentralstrahlen 16 auf das Volumenelement 30 gerichtet.
Dadurch verschwinden die Anteile der Echosignale, die von den Randstrahlen 18 kommen. Auf diese Weise wird eine Fehlerquelle eliminiert.

Durch das Verfahren gemäß der Erfindung kann die Richtung des Zentralstrahls 16 vom Prüfkopf 12 elektronisch so verändert werden, dass der Zentralstrahl 16 in eine gewünschte Richtung gesteuert wird. Dies erfolgt mit Hilfe der Gruppenstrahlertechnik. Bei Verwendung eines zweidimensionalen Gruppenstrahlers wird der Zentralstrahl 16 in kleiner Rasterung elektronisch zweidimensional in seiner Richtung geändert.

Bei dem erfindungsgemäßen Verfahren wird jedes Volumenelement 30 von der verschiedenen Prüfkopfpositionen 22, 24 und 26 jeweils mit dem Zentralstrahl 16 getroffen. Dadurch erfolgt die Summation automatisch mit der korrekten Gewichtung.

Die auf diese Weise gewonnenen Resultate können auch nach dem AVG-Verfahren ausgewertet werden. Die relativ große Datenmenge kann ohne Probleme aufgezeichnet und abgespeichert werden.

Bei der Programmierung der Ausrichtung des Prüfkopfes 12 wird die richtuhgsabhängige Empfindlichkeit bereits bei der Messung berücksichtigt, indem eine Angle-Amplitude-Correction (AAC) eingestellt wird.

Bei der Gruppenstrahlertechnik wird ein Gruppenstrahlerprüfkopf 12 verwendet, bei dem der Winkelbereich elektronisch einstellbar ist. Mit dem Gruppenstrahlerprüfkopf 12 kann ein wesentlich größeres Volumen abgetastet werden als mit einem konventionellen Prüfkopf 12.

Außerdem kann das Verfahren gemäß der Erfindung nicht nur für die zerstörungsfreie Materialprüfung, sondern auch in entsprechender Weise für medizinische und medizintechnische Anwendungen vorgesehen sein.

Dabei können beispielsweise von Außen Untersuchungen der inneren Struktur des menschlichen oder tierischen Körpers durchgeführt werden. Insbesondere können Tumore oder andere konstitutionelle Veränderungen oder Erkrankungen innerhalb der Körpers aufgefunden und geortet werden.

Weiterhin ermöglicht das Verfahren auch die Untersuchung von Fremdkörpern, die zu Behanellungszwecken in den menschlichen oder tierischen Körper eingesetzt worden sind. Beispielsweise können solche Befestigungselemente, die zum Verbinden von Knochenfrakturen eingesetzt worden sind, auf diese Weise untersucht werden.

Das erfindungsgemäße Verfahren führt zu einer größeren Ortsauflösung und ermöglicht die Auswertung mit dem AVG-Verfahren. Dies führt zu einer Verbesserung der Bewertung von Mäterialfehlern.

## Patentansprüche

1. Verfahren zur zerstörungsfreien Materialprüfung eines zumindest abschnittsweise massiven Prüfgegenstands (10) durch Beaufschlagen des Prüfgegenstands (10) mit Ultraschallwellen (20) und Erfassen der innerhalb des Prüfgegenstands (10) reflektierten Ultraschallwellen, wobei das Verfahren die folgenden Schritte aufweist:
a) rechnergestütztes Unterteilen des Prüfgegenstands (10) in eine vorbestimmte Anzahl von Volumenelementen (30),
b) Beaufschlagen des Prüfgegenstands (10) mit einem Schallfeld (14) während eines Abtastens der Oberfläche oder zumindest eines Oberflächenabschnitts des Prüfgegenstands (10),
c) Erfassen der an den Volumenelementen reflektierten Schallwellen während des Abtastens der Oberfläche oder zumindest des Oberflächenabschnitts des Prüfgegenstands (10), und
d) phasenrichtiges Aufaddieren der an denselben Volumenelementen (30) reflektierten und an verschiedenen Messpositionen (22, 24, 26) auf der Oberfläche des Prüfgegenstands (10) erfassten Schallwellen,
**dadurch gekennzeichnet, dass**
in jeder Messposition (22, 24, 26) ein Zentralstrahl (16) auf das Volumenelement (30) gerichtet wird, wobei der Zentralstrahl (16) die maximale Intensität des Schallfeldes (14) aufweist.

2. Verfahren nach Anspruch 1,
**dadurch gekennzeichnet, dass**
der Zentralstrahl (16) elektronisch auf das Volumenelement (30) gerichtet wird.

3. Verfahren nach Anspruch 1 oder 2,
**dadurch gekennzeichnet, dass**
die Richtung des Zentralstrahls (16) zweidimensional veränderbar ist.

4. Verfahren nach einem der vorhergehenden Ansprüche,
**dadurch gekennzeichnet, dass**
zum Beaufschlagen des Prüfgegenstands (10) mit Ultraschall ein Prüfkopf (12) verwendet wird, der eine Vielzahl Ultraschallquellen umfasst.

5. Verfahren nach Anspruch 4,
**dadurch gekennzeichnet, dass**
der Prüfkopf (12) ein Gruppenstrahler ist.

6. Verfahren nach einem der vorhergehenden Ansprüche,
**dadurch gekennzeichnet, dass**
die aufaddierten Schallwellen nach dem Abstand-Verstärkung-Größe-Verfahren (AVG-Verfahren) ausgewertet werden.

7. Verfahren nach einem der vorhergehenden Ansprüche,
**dadurch gekennzeichnet, dass**
die Oberfläche oder zumindest der Oberflächenabschnitt des Prüfgegenstands (10) nach einem vorbestimmten Schema abgetastet wird.

8. Verfahren nach einem der vorhergehenden Ansprüche,
**dadurchgekennzeichnet, dass**
die Oberfläche oder zumindest der Oberflächenabschnitt des Prüfgegenstands (10) vollständig abgetastet wird.

9. Verfahren nach einem der vorhergehenden Ansprüche,
**dadurch gekennzeichnet, dass**
das Verfahren für die Materialprüfung eines Prüfgegenstands (10) aus Metall vorgesehen ist.

10. Verfahren nach einem der vorhergehenden Ansprüche,
**dadurch gekennzeichnet, dass**
das Verfahren für die Materialprüfung eines geschmiedeten Bauteils (10) vorgesehen ist.

11. Vorrichtung zur zerstörungsfreien Materialprüfung eines zumindest abschnittsweise massiven Prüfgegenstands (10), der rechnergestützt in eine vorbestimmte Anzahl von Volumenelementen (30) unterteilt ist, wobei die Vorrichtung wenigstens einen Prüfkopf (12) zum Beaufschlagen des Prüfgegenstands (10) mit einem Schallfeld (14) während eines Abtastens der Oberfläche oder zumindest eines Oberflächenabschnitts des prüfgegenstands (10) und zum Erfassen der an den Volumenelementen (30) reflektierten Schallwellen während des Abtastens der Oberfläche oder zumindest des Oberflächenabschnitts des Prüfgegenstands (10),
**dadurch gekennzeichnet, dass**
ein vom Prüfkopf (12) ausgehender Zentralstrahl (16) auf das Volumenelement (30) ausrichtbar ist, wobei der Zentralstrahl (16) die maximale Intensität des Schallfeldes (14) aufweist.

12. Vorrichtung nach Anspruch 11,
**dadurch gekennzeichnet, dass**
der Zentralstrahl (16) elektronisch auf das Volumenelement (30) ausrichtbar ist.

13. Vorrichtung nach Anspruch 11 oder 12,
**dadurch gekennzeichnet, dass**
der Prüfkopf (16) als Gruppenstrahler ausgebildet ist.

14. Vorrichtung nach einem der Ansprüche 11 bis 13,
**dadurch gekennzeichnet, dass**
der Prüfkopf (16) eine Vielzahl Ultraschallquellen umfasst.

15. Vorrichtung zur Untersuchung eines Objekts innerhalb eines menschlichen oder tierischen Körpers, der rechnergestützt in eine vorbestimmte Anzahl von Volumenelementen (30) unterteilt ist, wobei die Vorrichtung wenigstens einen Prüfkopf (12) zum Beaufschlagen des Körpers oder zumindest eines Bereiches des Körpers mit einem Schalifeld (14) während eines Abtastens der Oberfläche oder zumindest eines Oberflächenabschnitts des Körpers und zum Erfassen der an den Volumenelementen (30) reflektierten Schallwellen während des Abtastens der Oberfläche oder zumindest des Oberflächenabschnitts des Körpers,
**dadurchgekennzeichnet,dass**
ein vom Prüfkopf (12) ausgehender Zentralstrahl (16) auf das Volumenelement (30) ausrichtbar ist, wobei der Zentralstrahl (16) die maximale Intensität des Schallfeldes (14) aufweist.

16. Vorrichtung nach Anspruch 15,
**dadurch gekennzeichnet, dass**
der Zentralstrahl (16) elektronisch auf das Volumenelement (30) ausrichtbar ist.

17. Vorrichtung nach Anspruch 15 oder 16,
**dadurch gekennzeichwet, dass**
der Prüfkopf (16) als Gruppenstrahler ausgebildet ist.

18. Vorrichtung nach einem der Ansprüche 15 bis 17,
**dadurch gekennzeichnet, dass**
der Prüfkopf (16) eine Vielzahl Ultraschallquellen umfasst.
